Europäisches Patentamt

European Patent Office

Office européen des brevets

(19)

(11) Publication number: **0 061 017**
**B1**

(12) **EUROPEAN PATENT SPECIFICATION**

(45) Date of publication of patent specification: **19.09.84**

(51) Int. Cl.³: **B 01 D 11/02, A 23 G 1/00**

(21) Application number: **82101477.6**

(22) Date of filing: **26.02.82**

(54) Removal of xanthine stimulants from cocoa.

(30) Priority: **20.03.81 US 245924**
**31.07.81 US 288741**

(43) Date of publication of application:
**29.09.82 Bulletin 82/39**

(45) Publication of the grant of the patent:
**19.09.84 Bulletin 84/38**

(84) Designated Contracting States:
**BE CH DE FR IT LI NL SE**

(56) References cited:
**FR-A-2 079 261**
**FR-A-2 140 099**
**FR-A-2 394 547**

(73) Proprietor: **SOCIETE DES PRODUITS NESTLE S.A.**
**Case postale 353**
**CH-1800 Vevey (CH)**

(72) Inventor: **Margolis, Geoffrey**
**42, Ch. de la Potteilaz**
**CH-1030 Bussigny (CH)**
Inventor: **Chiovini, Jacky**
**CH-1349 Daillens (CH)**
Inventor: **Pagliaro, Fulvio Alessandro**
**885 Catalpa Place**
**Marysville Ohio 43040 (US)**

Courier Press, Leamington Spa, England.

# Description

The present invention relates to the extraction of xanthine stimulants from cocoa, more especially from a cocoa material swollen by adding water.

Cocoa contains certain methyl-substituted xanthines such as theobromine and caffeine which have stimulating properties and it is often desirable to prepare a cocoa product substantially free from such substances. In this invention, these stimulating substances are referred to as xanthine stimulants.

United States Patent No. 3 923 847 describes and claims a method for the production of cocoa butter from cocoa mass or from roasted or unroasted cocoa nibs comprising the step of contacting said cocoa product with a food-acceptable solvent gas which is supercritical in respect of temperature and pressure for extraction of said cocoa butter by the solvent gas, and removing the solvent gas bearing the cocoa butter from the residue of said cocoa product.

There is only a very small fraction of water naturally present in the cocoa and no water is used in the process of the above mentioned patent: we have repeated the process described and have found that less than 1 % of the xanthine stimulants is extracted with the cocoa butter. Surprisingly, we have now found that by carrying out a similar process but using a cocoa material which has been swollen by adding at least 0.1 part by weight of water per part by weight of cocoa product, the amount of cocoa butter extracted is very small whereas a large proportion of the xanthine stimulants is extracted.

Accordingly, the present invention provides a process for extracting xanthine stimulants from a cocoa material which comprises contacting the cocoa material swollen with at least 0.1 part by weight of water per part by weight of cocoa with a food-acceptable solvent gas which is supercritical in respect of temperature and pressure and separating the solvent gas containing the xanthine stimulants from the swollen cocoa material having a reduced content of xanthine stimulants. The term "reduced content" in the present context is intended to cover zero content.

The food-acceptable supercritical solvent gas is moistened by the water present in the swollen cocoa material but if desired, it may be moistened with a little water before contacting the swollen cocoa material.

The term "supercritical" as used herein denotes that the temperature is above the critical temperature and the pressure is above the critical pressure. A variety of food-acceptable supercritical gases may be used, for example, nitrous oxide and the critical data are available in the literature. However, it is preferred to use supercritical carbon dioxide for which the temperature is above the critical temperature of 31.3°C and the pressure is above the critical pressure of 73.8 bar.

The cocoa material may be any cocoa-containing mass, for example, roasted cocoa nibs or even the ground shells of cocoa beans, but is preferably the green, ground, unroasted cocoa nibs formed by cleaning, cracking and winnowing the cocoa beans to remove filth, germs and most of the shell material, followed by grinding.

The cocoa material may be swollen by adding preferably from 0.2 to 1.5 parts and especially from 0.4 to 0.7 parts by weight of water per part by weight of cocoa material. Warm water, water vapour or a mixture of warm water and water vapour may conveniently be used to swell the cocoa material. The temperature of the water added is preferably above 70°C and the mixture is allowed to swell for a period of time for example, from 30 minutes to 2 hours, preferably under conditions of agitation.

The cocoa material is preferably swollen by an amount from 20 to 55 % and especially from 35 to 45 %.

The solubility of the xanthine stimulants in the supercritical gas depends on its temperature and pressure. By adjusting these two latter parameters it is possible to achieve the optimum efficiency.

The extraction should be carried out at a temperature sufficiently high to achieve extraction in the shortest time but below the temperature where roasting of the cocoa occurs. The temperature is conveniently up to 120°C and preferably from 80° to 100°C.

The extraction is conveniently carried out at a pressure above 80 bars and preferably from 250 to 350 bars. Although higher pressures may be used, for example, 500 bars or more, the maximum pressure is usually limited by the economics of the process.

The contact of the swollen cocoa material with the supercritical gas may be effected in a single cell or other piece of equipment providing for intimate fluid contact and separation of two phases, or in two or more cells for a countercurrent process. The extraction is carried out in a closed system.

Preferably, provision is made for regenerating the supercritical gas by the removal of substantially all of the xanthine stimulants taken up by it. The regenerated supercritical gas preferably contains as little xanthine stimulant as possible and it can be used to contact fresh cocoa material, for example, by recycling in a closed system. The xanthine stimulants may, for instance, be precipitated by rendering them insoluble in the supercritical gas by adjusting the temperature and/or pressure. However, the xanthine stimulants are preferably removed from the supercritical gas by washing with water or by adsorption on active charcoal. In the washing step, the supercritical gas containing the xanthine stimulants is contacted with water, for example, in a packed column or other piece of equipment providing for intimate fluid-fluid contact conveniently in a continuous countercurrent manner, and the aqueous solution of xanthine stimulants is separated for recovery of the xanthine stimulants, for example, by evaporation. If the xanthine stimulants are removed by adsorption on active charcoal the supercritical gas containing the xanthine stimulants conveniently flows through a column containing active charcoal which may be moistened if desired, preferably with from 30 to 50 % by weight of water.

If desired, the xanthine stimulants may be recovered from the active charcoal by solvent extraction, for example with a chlorinated hydrocarbon such as methylene dichloride.

The removal of xanthine stimulants from the supercritical gas may be carried out within the same ranges of temperature and pressure as are employed in the extraction of the xanthine stimulants from the cocoa material and is preferably carried out at the same temperature and pressure as the extraction. The regenerated supercritical gas substantially free of xanthine stimulants may then be used to contact a fresh batch of cocoa material.

After the swollen cocoa material having a reduced content of xanthine stimulants has been separated it may be dried before being subjected to roasting and the further stages of cocoa technology.

The following Examples further illustrate the present invention.

Example 1

400 grams of green unroasted cocoa nibs containing 1.37 % theobromine were swollen with 260 grams of water at 80°C for 1 hour to obtain an increase in moisture of 40 %.

The swollen nibs were put in a cell through which supercritical carbon dioxide flowed at a temperature of 90°C and a pressure of 300 bar. The carbon dioxide was freed from the theobromine by passing through a column of active charcoal containing 40 % by weight of water. After six hours treatment the cocoa material was taken out of the cell and dried. The content of theobromine in the cocoa was found to be 0.15 %, that is, an 89 % reduction. There was no loss of fatty material.

Example 2

10 kilograms of green unroasted cocoa nibs containing 1.37 % theobromine were swollen with 4.25 kilograms of water at 80°C for 1 hour to obtain an increase in moisture of 30 %. The swollen cocoa nibs were put in a cell through which supercritical carbon dioxide flowed at a temperature of 90°C and a pressure of 300 bars for 2 hours. The carbon dioxide was freed from the theobromine by passing through a column of active charcoal containing 40 % by weight of water. The cocoa was removed and dried and the content of theobromine was found to be 0.39 %, that is, a 71 % reduction. There was no loss of fatty material.

Example 3

400 grams of green unroasted cocoa nibs containing 1.37 % theobromine were swollen with 260 grams of water at 80°C for 1 hour to obtain an increase in moisture of 40 %.

The swollen cocoa nibs were extracted in three cells, each holding 40 grams, through which supercritical carbon dioxide flowed at a temperature of 90°C and a pressure of 300 bar. The carbon dioxide was freed from the theobromine by passing through a column of active charcoal containing 40 % by weight of water. After 6 hours extraction during which the cells were changed every 2 hours, the cocoa was removed and dried and was found to have a theobromine content of 0.04 %, that is, a reduction of 97 %. There was no loss of fatty material.

Example 4

By following an identical procedure to that described in Example 2 but using cocoa nibs containing 1.399 % theobromine instead of 1.37 % the content of theobromine was reduced to 0.361 %, that is a 74.2 % reduction. In this Example the caffeine content was also measured and it was found to have been reduced by the process from 0.070 % to zero.

Claims

1. A process for extracting xanthine stimulants from a cocoa material which comprises contacting a cocoa material swollen with at least 0.1 part by weight of water per part by weight of cocoa with a food-acceptable solvent gas which is supercritical in respect of temperature and pressure and separating the solvent gas containing the xanthine stimulants from the swollen cocoa material having a reduced content of xanthine stimulants.

2. A process according to claim 1 in which the food-acceptable solvent gas is supercritical carbon dioxide.

3. A process according to claim 1 or claim 2 in which the cocoa material consists of green, ground unroasted cocoa nibs.

4. A process according to any of the preceding claims in which the cocoa material is swollen by adding from 0.4 to 0.7 parts by weight of water per part by weight of cocoa material.

5. A process according to any of the preceding claims in which the extraction is carried out at a temperature of from 80° to 100°C.

6. A process according to any of the preceding claims in which the extraction is carried out at a pressure of from 250 to 350 bars.

7. A process according to any of the preceding claims in which provision is made for regenerating the supercritical gas by the removal of substantially all of the xanthine stimulants taken up by it.

8. A process according to claim 7 in which the xanthine stimulants are removed from the supercritical gas by washing with water to form an aqueous solution of the xanthine stimulants.

9. A process as claimed in claim 8 in which the xanthine stimulants are recovered from the aqueous solution by evaporation.

10. A process according to claim 7 in which the xanthine stimulants are removed from the supercritical gas by adsorption on active charcoal moistened with from 30 to 50 % by weight of water.

11. A process according to any of claims 7 to 10 in which the removal of the xanthine stimulants from the supercritical gas is carried out at the same temperature and pressure as are employed in the extraction of the xanthine stimulants from the cocoa material.

12. A process according to any of claims 7 to 11 in which the regenerated supercritical gas is used to contact a fresh batch of cocoa material.

**Revendications**

1. Procédé pour extraire des stimulants du type xanthine d'une matière à base de cacao, qui consiste à mettre en contact une matière à base de cacao gonflée avec au moins 0,1 partie en poids d'eau par partie en poids de cacao, avec un solvant gazeux acceptable du point de vue alimentaire, qui est supercritique en ce qui concerne la température et la pression, et à séparer le solvant gazeux contenant les stimulants du type xanthine de la matière à base de cacao gonflée ayant une teneur réduite en stimulants du type xanthine.

2. Procédé suivant la revendication 1, dans lequel le solvant gazeux acceptable du point de vue alimentaire est de l'anhydride carbonique supercritique.

3. Procédé selon la revendication 1 ou la revendication 2, dans lequel la matière à base de cacao est constituée de grains de cacao décortiqués, verts, broyés et non torréfiés.

4. Procédé selon l'une quelconque des revendications précédentes, dans lequel la matière à base de cacao est gonflée par addition de 0,4 à 0,7 partie en poids d'eau par partie en poids de matière à base de cacao.

5. Procédé selon l'une quelconque des revendications précédentes, dans lequel l'extraction s'effectue à une température de 80 à 100°C.

6. Procédé selon l'une quelconque des revendications précédentes, dans lequel l'extraction est effectuée à une pression de 250 à 350 bars.

7. Procédé selon l'une quelconque des revendications précédentes, dans lequel il est prévu de régénérer le gaz supercritique par l'élimination de pratiquement la totalité des stimulants du type xanthine qu'il a pris.

8. Procédé selon la revendication 7, dans lequel les stimulants du type xanthine sont éliminés du gaz supercritique par lavage à l'eau afin de former une solution aqueuse des stimulants du type xanthine.

9. Procédé selon la revendication 8, dans lequel les stimulants du type xanthine sont récupérés de la solution aqueuse par évaporation.

10. Procédé selon la revendication 7, dans lequel les stimulants du type xanthine sont éliminés du gaz supercritque par adsorption sur du charbon actif humidifié à raison de 30 à 50 % en poids d'eau.

11. Procédé selon l'une quelconque des revendications 7 à 10, dans lequel l'élimination des stimulants du type xanthine du gaz supercritique est effectuée aux mêmes température et pression que celles utilisées dans l'extraction des stimulants du type xanthine de la matière à base de cacao.

12. Procédé selon l'une quelconque des revendications 7 à 11, dans lequel le gaz supercritique régénéré est utilisé pour entrer en contact avec une charge fraîche de matière à base de cacao.

**Patentansprüche**

1. Verfahren zum Extrahieren von Xanthin-Stimulanzien aus einem Kakao-Material, das das Inkontaktbringen eines mit wenigstens 0,1 Gew.-Teilen Wasser pro Gew.-Teil Kakao gequollenen Kakaomaterials mit einem für Nahrungsmittel geeigneten Lösungsmittel-Gas, das im Hinblock auf Temperatur und Druck überkritisch ist, und die Abtrennung des Lösungsmittel-Gases, das die Xanthin-Stimulanzien enthält, von dem gequollenen Kakao-Material, das einen verminderten Anteil an Xanthin-Stimulanzien aufweist, umfaßt.

2. Verfahren nach Anspruch 1, bei dem das für Nahrungsmittel geeignete Lösungsmittel-Gas überkritisches Kohlendioxid ist.

3. Verfahren nach Anspruch 1 oder Anspruch 2, bei dem das Kakaomaterial aus grünen, gemahlenen ungerösteten Kakao-Keimblättern besteht.

4. Verfahren nach einem beliebigen der vorausgehenden Ansprüche, bei dem das Kakao-Material dadurch gequollen ist, daß von 0,4 bis 0,7 Gew.-Teile Wasser pro Gew.-Teil Kakao-Material zugesetzt sind.

5. Verfahren nach einem beliebigen der vorausgehenden Ansprüche, bei dem die Extraktion bei einer Temperatur von 80° bis 100°C durchgeführt wird.

6. Verfahren nach einem beliebigen der vorausgehenden Ansprüche, bei dem die Extraktion bei einem Druck von 250 bis 350 bar durchgeführt wird.

7. Verfahren nach einem beliebigen der vorausgehenden Ansprüche, bei dem für eine Regenerierung des überkritischen Gases durch die Entfernung von im wesentlichen allen Xanthin-Stimulanzien, die von ihm aufgenommen wurden, gesorgt wird.

8. Verfahren nach Anspruch 7, bei dem die Xanthin-Stimulanzien aus dem überkritischen Gas durch Waschen mit Wasser unter Bildung einer wäßrigen Lösung der Xanthin-Stimulanzien entfernt werden.

9. Verfahren nach Anspruch 8, bei dem die Xanthin-Stimulanzien durch Verdampfen aus der wäßrigen Lösung wiedergewonnen werden.

10. Verfahren nach Anspruch 7, bei dem die Xanthin-Stimulanzien aus dem überkritischen Gas durch Adsorption an Aktivkohle entfernt werden, die mit von 30 bis 50 Gew.-% Wasser angefeuchtet ist.

11. Verfahren nach einem beliebigen der Ansprüche 7 bis 10, bei dem die Entfernung der Xanthin-Stimulanzien aus dem überkritischen Gas bei der gleichen Temperatur und dem gleichen Druck durchgeführt wird, die bei der Extraktion der Xanthin-Stimulanzien aus dem Kakao-Material angewandt werden.

12. Verfahren nach einem beliebigen der Ansprüche 7 bis 11, bei dem das regenerierte überkritische Gas verwendet wird, eine frische Einsatzmenge des Kakao-Materials zu kontaktieren.